# EUROPÄISCHE PATENTSCHRIFT

(11) **EP 4 245 460 B1**
(45) Veröffentlichungstag und Bekanntmachung des Hinweises auf die Patenterteilung: **07.05.2025**
(21) Anmeldenummer: 22162797.9
(22) Anmeldetag: 17.03.2022
(51) Int. Cl.: B24C 1/04, B23P 23/04, B23Q 1/00, B23D 47/00, B28D 1/04, B26F 3/00, B24C 3/02

(54) **BEARBEITUNGSMASCHINE, INSBESONDERE PLATTENBEARBEITUNGSMASCHINE, SOWIE VERFAHREN ZUR BETÄTIGUNG EINER BEARBEITUNGSMASCHINE**
PROCESSING MACHINE, IN PARTICULAR A PLATE PROCESSING MACHINE, AND METHOD FOR OPERATING A PROCESSING MACHINE
MACHINE D'USINAGE, EN PARTICULIER MACHINE D'USINAGE DE PANNEAUX, AINSI QUE PROCÉDÉ DE FONCTIONNEMENT D'UNE MACHINE D'USINAGE

(43) Veröffentlichungstag der Anmeldung: 20.09.2023
(73) Patentinhaber: Uhde High Pressure Technologies GmbH, 58093 Hagen (DE); thyssenkrupp AG, 45143 Essen (DE)
(72) Erfinder: Gabriel, Marcin, 58093 Hagen (DE)
(74) Vertreter: thyssenkrupp Intellectual Property GmbH

(56) Entgegenhaltungen:
- EP-A2- 0 317 296
- WO-A2-2010/113127
- DE-A1- 102014 014 359
- DE-A1- 19 858 971
- DE-A1- 3 708 608
- DE-U1- 202012 010 050
- KR-A- 20180 013 373
- US-A- 5 605 492
- US-A1- 2006 135 041
- US-A1- 2008 110 311

## Beschreibung

Die vorliegende Erfindung betriff eine Bearbeitungsmaschine gemäß dem Oberbegriff des Anspruchs 1, sowie ein Verfahren zur Betätigung einer Bearbeitungsmaschine gemäß dem Oberbegriff des Anspruchs 8. Eine derartige Maschine ist aus dem Dokument DE 10 2009 022 784 A1 bekannt.

Eine Bearbeitungsmaschine, insbesondere Plattenbearbeitungsmaschine zum Bearbeiten von Platten aus Stein, Holz, Metall und/oder deren Ersatzwerkstoffen mit einem Arbeitsbereich mit einer Auflagereinrichtung, um die Platten jeweils während der Bearbeitung, vorzugsweise horizontal angeordnet, aufzunehmen, mit einem Bearbeitungskopf mit einem Werkzeugantriebsmotor mit abtriebseitig angeordnetem Werkzeug, ist beispielsweise aus der DE 10 2009 022 784 A1 bekannt. Bei dem Werkzeug kann es sich beispielsweise um Kreissägeblatt bzw. eine Kreissäge handeln. Zusätzlich kann die Maschine mit einem Wasserstrahlschneidkopf ausgestattet werden.

Die Wasserstrahltechnologie bietet mehrere Vorteile im Vergleich zu herkömmlichen Bearbeitungsmethoden und auch nicht-traditionellen Bearbeitungstechniken (Laserschneiden, Plasmaschneiden, Ultraschallbearbeitung), insbesondere
- nahezu jedes Material kann geschnitten werden (Stahl, Keramik, Verbundwerkstoffe, Glas, Stein usw.)
- große Materialstärken schneidbar: bis 300 mm bei 4.000 bar Wasserdruck und bis 500 mm bei 6.000 bar Wasserdruck
- keine thermische Beeinflussung des Werkstückmaterials
- keine thermischen und chemischen Reaktionen
- kein direkter Kontakt zwischen dem Schneidkopf und dem Werkstück
- kleine Schnittfugenbreite: typischerweise ca. 0,5 - 1,2 mm, was zu Materialeinsparungen beiträgt
- omnidirektionales Werkzeug - Fähigkeit zur Bearbeitung komplexer Geometrien
- geringe Schnitt- und Reaktionskräfte
- Multifunktionswerkzeug (Schneiden, Bohren, Fräsen, Reinigen mit einem Werkzeug)
- gute Automatisierung- und Robotisierungsmöglichkeiten

Diese Vorteile führen zu einer schnellen Erweiterung der Anwendungsgebiete, z. B. in der Flugzeugindustrie, Automobilindustrie, Militär, Medizin und Lohnbearbeitung. Heutzutage werden in den industriellen Anwendungen zwei Arten des Hochdruck-Wasserstrahlen verwendet - der reine Wasserstrahl (WS) und der Wasserabrasivstrahl (WAS). Das reine Wasserstrahlschneiden nutzt die erosive Wirkung von reinem Wasser und wird zum Schneiden weicher Materialien, wie z. B. Dichtungen, Schaumstoffe, Gummi, Holz, Kunststoffe, Papierprodukte oder Lebensmittel, eingesetzt. Dabei wird in einer Hochdruckpumpe Wasser komprimiert und durch eine Hochdruckleitung zu einer Wasserdüse mit einem Durchmesser von 0,08 bis 0,5 mm gefördert. An der Wasserdüse, die aus Saphir oder Diamant besteht, wird die potentielle Energie des komprimierten Wassers in hohe kinetische Energie des Wasserstrahls umgewandelt. Dabei kann der Wasserstrahl die mehrfache Luft-Schallgeschwindigkeit erreichen (z. B. bei 4.000 bar: ca. 805 - 875 m/s). In der alltäglichen Praxis werden Wasserdrücke von 400 bar bis 6.000 bar eingesetzt.

Um Wasser auf den hohen Druck zu komprimieren, werden meistens hydraulische Druckübersetzerpumpen oder direkt angetriebene Plungerpumpen verwendet. Aktuell lassen sich mit typischen 4.000 bar Druckübersetzerpumpen Fördervolumen von 0,8 bis 7,6 I/min erreichen, die meisten 6.000 bar Druckübersetzerpumpen erreichen Fördervolumen zwischen 2,8 - 6,0 I/min an.

Durch Zugabe von abrasiven Feststoffpartikeln (z.B. Granat oder Olivin), steigt die Schneidwirkung des Wasserstrahls erheblich. In dem Fall resultiert der Materialabtrag vor allem aus dem Mikrozerspanen mit abrasiven Partikeln. Die Abrasivpartikel, die im Fokussierrohr des Schneidkopfs durch den Hochgeschwindigkeits-Wasserstrahl beschleunigt werden, treffen mit hoher Geschwindigkeit auf die Werkstückoberfläche und induzieren darin mikroskopische Abtragungen (Erosion). Das ermöglicht das Schneiden von harten Materialien, wie Metalle, Komposite, Beton, Glas, Stein usw.

Beim WAS werden momentan zwei Methoden das Abrasivmittel zuzuführen unterschieden: Wasserabrasivinjektorstrahl (WAIS) und Wasserabrasivsuspensionsstrahl (WASS).

WAIS ist heute Stand der Technik und wird weltweit in der industriellen Fertigung mit Drücken bis 6.000 bar eingesetzt. Der beim WAIS erzeugte Wasserstrahl strömt durch eine Mischkammer im Schneidkopf und erzeugt dort einen Unterdruck (Venturi-Effekt) der die pneumatische Zufuhr von trockenen, festen Abrasivpartikeln ermöglicht. Im Fokussierrohr werden Wasser, Abrasivpartikel und Luft gemischt, beschleunigt und zu einem kohärenten Abrasivwasserstrahl fokussiert. Im Durchschnitt besteht der WAIS aus ca. 95 % Luft, 4 % Wasser und 1 % Abrasivpartikel.

Zum Erzeugen von WASS wird am häufigsten das sog. "Bypass-Prinzip" verwendet. Bei diesem Verfahren wird ein Teil des von der Pumpe geförderten Wassers dazu verwendet, die Abrasivpartikel aus einem Vorratsdruckbehälter zu fördern und in den Hauptwasserstrom einzumischen. Die entstehende Suspension kann durch elastische Hochdruckschläuche zum Schneidkopf geleitet werden. Der Hauptunterschied zwischen dem WAIS und dem WASS besteht in dem Fehlen von Luft. Dadurch charakterisiert den WASS eine höhere Stabilität und eine größere Schnittleistung verglichen mit dem WAIS - eine Schnittstärke von 1.000 mm Stahlbeton ist möglich. Kommerzielle WASS-Systeme arbeiten mit Drücken von bis zu 2.000 bar.

Das Ergebnis des Wasserstrahlschneidens hängt gleichzeitig von mehreren Prozessparametern ab. Die wichtigsten sind der Wasserdruck, die Durchmesser der Wasserdüse und des Fokussierrohrs, die Vorschubgeschwindigkeit des Schneidkopfs, der Abstand Wasserdüse-Werkstück, die Art und Dicke des Materials, die Art und Menge der Abrasivpartikel.

In der industriellen Praxis wird das Wasserstrahlschneiden vor allem zum Schneiden von zweidimensionalen (2D) Werkstücken aus Plattenmaterialien eingesetzt. Ein oder mehrere Schneidköpfe werden entlang zwei CNC-gesteuerter X-Y-Achsen einer Portalanlage geführt. Die dritte Z-Achse ermöglicht es, die Höhe des Schneidkopfes an die Dicke des Werkstücks anzupassen. Die Restenergie des Wasserstrahls an der Austrittsseite des Werkstücks wird in einem Wasserbecken abgebaut.

Durch die Integration eines 3D-Schneidkopfes (5-Achs-Steuerung) können neue Anwendungsfelder für das Wasserstrahlschneiden erschlossen werden. Beide Arten der Schneidköpfe, 2D und 3D, können auch in einer Schneidanlage kombiniert werden. Für das Wasserstrahlschneiden von Produkten mit komplexen 3D-Geometrien aber mit geringeren Anforderungen an die Genauigkeit werden auch Robotersysteme verwendet.

Ein Hochdruck-Wasserstrahlschneidkopf ist beispielsweise aus der DE 37 08 608 A1 bekannt geworden.

Aus der DE 196 03 933 A1 ist eine Vorrichtung zur Bearbeitung von Platten bekannt geworden, wobei zur Erzeugung von Schnittflächen mindestens eine Schneideinrichtung und mindestens eine Wasserstrahlschneideinrichtung vorgesehen ist.

Aus der DE10 2006 002 504 A1 ist ferner eine Plattenbearbeitungsvorrichtung mit einem Tisch zur Lagerung einer zu bearbeitenden Platte, einer Vorschubeinrichtung zum Verschieben der Platte in einer ersten Richtung (X-Richtung), und einer Bearbeitungseinheit, die zwei antreibbare Sägeblätter aufweist, bekannt geworden, wobei die Bearbeitungseinheit zum Ausführen eines Sägevorgangs von einer Bearbeitungsseite der Platte her in einer zweiten Richtung (Y-Richtung), die zur X-Richtung rechtwinklig verläuft, antreibbar gelagert ist, die sich insbesondere dadurch auszeichnet, dass die Bearbeitungseinheit ein weiteres Werkzeug aufweist, das fähig ist, die Platte in mehr als einer einzigen Richtung zu bearbeiten, wobei das weitere Werkzeug um mindestens eine Achse schwenkbar gelagert ist, wobei das weitere Werkzeug als Wasserstrahleinheit ausgestaltet sein kann.

Wie oben bereits ausgeführt eignet sich die Bearbeitungsmaschine bevorzugt für die Bearbeitung, insbesondere Schneiden oder Einschneiden von plattenförmigen Werkstücken, wie beispielsweise von Sandwich-Styropor-Metall-Paneelen, Sandwich-Mineralwolle-Metall-Paneele, Sandwich-Schaumpolymere-Metall-Paneele, generell Sandwich-Isolierstoff-Metall-Paneele, Verbundplatten, etc. Hier insbesondere in der Konstellation mit einer Kreissäge als weitere Bearbeitungseinrichtung und einem Wasserstrahlschneidkopf.

Die Kreissäge schneidet beispielsweise als erstes die oberste Metallschicht und zum Teil die Styropor-Zwischenschicht, anschließend schneidet der Wasserstrahl die restliche Zwischenschicht ohne die untere Metallschicht zu beschädigen.

Da sich die gesamte Bearbeitungsmaschine mit dem installierten Wasserstrahl-Schneidkopf nach dem Schnitt um 180° drehen soll, wird, um mit dem nächsten Schnitt zu beginnen, eine flexible Halterung des Wasserstrahl-Schneidkopfs benötigt.

Eine weitere Bearbeitungsmaschine ist beispielsweise aus der DE 20 2012 010050 U1 bekannt geworden. Die DE 20 2012 010050 U1 beschreibt eine Fluidstrahlschneidvorrichtung mit einem Trägerteil und einem Schneidkopf, zwischen denen eine Trennebene verläuft. Ein beweglicher Ausleger mit einer Bohreinheit ist am Trägerteil befestigt. Die Bohreinheit kann präzise Startbohrungen erstellen, bevor der Schneidvorgang beginnt, um Delaminierungen bei Verbundmaterialien zu vermeiden. Dies verbessert Effizienz und Präzision durch die Kombination von Bohr- und Schneidvorgängen in einem automatisierten Prozess und ermöglicht flexible Anpassungen an verschiedene Werkstückgeometrien.

Eine weitere Bearbeitungsmaschine ist beispielsweise aus der DE 10 2014 014359 A1 bekannt geworden. Die DE 10 2014 014359 A1 beschreibt eine multifunktionale Roboterzelle zur Bearbeitung von Werkstücken. Diese Roboterzelle kombiniert einen Bearbeitungsroboter zum Wasserstrahlschneiden mit mindestens einer weiteren Bearbeitungsvorrichtung für ein zusätzliches Bearbeitungsverfahren. Dadurch entfallen zeit- und kostenintensive Transportwege zwischen verschiedenen Bearbeitungsanlagen. Die Roboterzelle ermöglicht eine effizientere und kostengünstigere Bearbeitung, da das Werkstück ohne Umsetzen direkt in der Zelle weiterverarbeitet werden kann. Der Einsatz von austauschbaren Werkzeugköpfen und die Möglichkeit, Bearbeitungsschritte simultan durchzuführen, steigert die Flexibilität und Geschwindigkeit der Werkstückbearbeitung.

Eine weitere Bearbeitungsmaschine ist beispielsweise aus der US 5 605 492 A bekannt geworden. Die US 5 605 492 A beschreibt eine Werkzeugmaschine zum Schneiden von Werkstücken, umfassend einen Schneidkopf mit mindestens zwei Schneideinheiten, die Schneidstrahlen auf das Werkstück richten. Diese Strahlen wirken nah beieinander, um den Schneidvorgang zu unterstützen. Die Werkzeugmaschine hat einen Arbeitstisch zur Unterstützung des Werkstücks, und sowohl das Werkstück als auch der Schneidkopf sind beweglich, um eine Schnittlinie zu erzeugen. Mindestens eine der Schneideinheiten ist relativ zur anderen beweglich, sodass der Winkel der Schneidstrahlen verändert werden kann. Der Schneidkopf kann Hochgeschwindigkeitswasserstrahlen verwenden, die abrasiv sein können, und die Schneidcharakteristika dieser Strahlen sind anpassbar.

Die Aufgabe der vorliegenden Erfindung liegt darin, eine verbesserte Bearbeitungsmaschine vorzuschlagen, insbesondere soll eine Bearbeitungsmaschine vorgeschlagen werden, mit dem eine flexible Halterung des Wasserstrahl-Schneidkopfs ermöglicht wird. Mit anderen Worten, soll insbesondere eine Möglichkeit zur Vermeidung einer komplizierten, anfälligen Hochdruck-Verrohrung mit HD-Drehgelenken für eine Bearbeitungsmaschine, insbesondere Metall-Kreissäge incl. Wasserstrahlschneiden, vorgeschlagen werden.

Erfindungsgemäß wird diese Aufgabe durch eine Bearbeitungsmaschine mit den kennzeichnenden Merkmalen des Anspruchs 1 gelöst. Dadurch, dass die Drehachse der weiteren Bearbeitungseinrichtung und die Drehachse des Wasserstrahlschneidkopfes parallel zueinander angeordnet sind, wobei der Wasserstrahlschneidkopf mit einer Zuleitung für das zum Schneiden benötigte Fluid, insbesondere Wasser, ausgestattet ist, wobei sich die Zuleitung von einem Anschlusspunkt von der Achse der Bearbeitungsmaschine zu dem Anschluss des Wasserstrahlschneidkopfs erstreckt, wobei die Zuleitung ausladend, insbesondere bogenförmig, zwischen dem Anschlusspunkt und dem Anschluss des Wasserstrahlschneidkopfes angeordnet ist, können die oben skizzierten Probleme abgestellt, zumindest aber gemindert werden. Mit anderen Worten ist es ein grundsätzlicher Gedanke der vorliegenden Erfindung, dass der Wasserstrahlschneidkopf drehbar gelagert ist und dadurch Hochdruck-Drehkupplungen und/oder aufwändige flexible Verrohrungen zumindest teilweise vermieden werden können. Weiterhin können durch einen drehbaren Wasserschneidkopf Kräfte /Momente aus der Verrohrung reduziert werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass der Wasserstrahlschneidkopf zusammen mit dem Anschluss drehbar aufgenommen ist. Der Anschluss für das zum Schneiden benötigte Fluid stellt insofern die Schnittstelle für eine Zuleitung dar. Wenn demnach der Wasserstrahlschneidkopf zusammen mit seinem Anschluss gedreht werden kann, dann wird in diesem Bereich beispielsweise keine kostspielige und fehleranfällige Hochdruck-Drehkupplung benötigt wird. Dies eröffnet beispielsweise Freiheiten bei der Ausgestaltung der Zuleitung, die dann beispielsweise auch starr bis starrer ausfallen kann.

Erfindungsgemäß ist vorgesehen, dass die Bearbeitungsmaschine eine weitere Bearbeitungseinrichtung umfasst, wobei die Bearbeitungsmaschine um mindestens eine Achse gedreht werden kann, wobei der Wasserstrahlschneidkopf in einem radialen Abstand zu der Drehachse der Bearbeitungsmaschine angeordnet ist, wobei der Wasserstrahlschneidkopf um eine Achse drehbar aufgenommen ist. Es wird die Möglichkeit eröffnet, dass der Wasserstrahlschneidkopf hinsichtlich seiner Drehachse individuell ausgerichtet und insbesondere nachgeführt werden kann. Dies ermöglicht beispielsweise den Anschluss einer Zuleitung für das für das Schneiden benötigte Fluid; die beispielsweise ohne kostenintensive Hochdruckdrehkupplungen auskommt. Die Bearbeitungsmaschine ist damit weniger störanfällig, individueller einsetzbar und letztendlich kostengünstiger.

In einer vorteilhaften Ausgestaltung der Erfindung kann vorgesehen sein, dass die weitere Bearbeitungseinrichtung als Kreissäge ausgestaltet ist, umfassend ein Kreissägeblatt mit einer Drehachse, welches von einer Verkleidung teilweise umgeben ist. Eine Kreissäge eignet sich bevorzugt als weitere Bearbeitungseinrichtung, insbesondere in Verbindung mit einem Wasserstrahlschneidkopf.

In einer weiteren vorteilhaften Ausgestaltung der Erfindung kann vorgesehen sein, dass der Wasserstrahlschneidkopf in einer Drehlagereinrichtung aufgenommen ist. Eine separate Aufnahme des Wasserstrahlschneidkopfes in einer Drehlagereinrichtung ermöglicht ein bestimmbares Drehverhalten des Wasserstrahlschneidkopfes, beispielsweise auch mit Anschlägen, Dämpfern, etc.

In einer weiteren vorteilhaften Ausgestaltung der Erfindung kann vorgesehen sein, dass die Drehlagerung mindestens eine Lageraufnahme mit einem Wälzlager oder Gleitlager umfasst. Ein derartiges Lager eignet sich besonders vorteilhaft für eine drehbare Lagerung des Wasserstrahlschneidkopfes.

Erfindungsgemäß ist vorgesehen, dass die Drehachse der weiteren Bearbeitungseinrichtung und die Drehachse des Wasserstrahlschneidkopfes parallel zueinander angeordnet sind. Insofern können der Wasserstrahlschneidkopf und die weitere Bearbeitungseinrichtung über ihre radial beabstandeten, vorzugsweise aber parallelen, Hochachsen verdreht werden.

In einer weiteren vorteilhaften Ausgestaltung der Erfindung kann vorgesehen sein, dass die Drehachse des Kreissägeblattes orthogonal zu der Drehachse der weiteren Bearbeitungseinrichtung und/oder des Wasserstrahlschneidkopfes ausgerichtet ist.

Erfindungsgemäß ist vorgesehen, dass der Wasserstrahlschneidkopf mit einer Zuleitung für das zum Schneiden benötigte Fluid, insbesondere Wasser, ausgestattet ist, wobei sich die Zuleitung von einem Anschlusspunkt von der Achse der Bearbeitungsmaschine zu dem Wasserstrahlschneidkopf erstreckt. Über den Abstand zwischen dem Anschlusspunkt zu dem Wasserstrahlschneidkopf kann eine bogenförmige Zuleitung ausgestaltet werden, die strömungstechnisch optimiert, zumindest aber vorteilhaft, ausgestaltet sein kann.

In einer weiteren vorteilhaften Ausgestaltung der Erfindung kann vorgesehen sein, dass die Anschlusskupplung in axialer Richtung oberhalb der weiteren Bearbeitungseinrichtung angeordnet ist. Es ergibt sich eine Zuleitung von oben nach in Schwerkraftrichtung unten. Erfindungsgemäß ist vorgesehen, dass die Zuleitung ausladend, insbesondere bogenförmig, zwischen dem Anschlusspunkt und dem Wasserstrahlschneidkopf angeordnet ist. Entsprechend ergibt sich eine vorteilhafte Möglichkeit, die Drehbewegung des Wasserstrahlschneidkopfes über die Zuleitung zu initiieren. Es wird grundsätzlich kein weiterer Antrieb für die Drehbewegung des Wasserstrahlschneidkopfes benötigt obgleich ein solcher Antrieb grundsätzlich möglich ist. Gleichwohl wird die Zuleitung stets durch den drehbaren Wasserstrahlschneidkopf entlastet.

Eine weitere Aufgabe der vorliegenden Erfindung liegt ferner darin, ein vorteilhaftes Verfahren zur Betätigung der erfindungsgemäßen Bearbeitungsmaschine vorzuschlagen.

Erfindungsgemäß wird diese Aufgabe durch ein Verfahren gemäß Anspruch 8 gelöst. Vorzugsweise kann vorgesehen sein, dass bei Drehung der Bearbeitungsmaschine um die Achse die weitere Bearbeitungseinrichtung gegenläufig zu dem Wasserstrahlschneidkopf gedreht wird. Diese Möglichkeit ergibt sich aus der erfindungsgemäß vorgeschlagenen Bearbeitungsmaschine, insbesondere aus dem drehbar gelagerten Wasserstrahlschneidkopf.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Bearbeitungsmaschine in einer perspektivischen Darstellung;
- Fig. 2: eine Bearbeitungsmaschine in einer ersten Position in einer seitlichen Ansicht;
- Fig. 2a: eine Bearbeitungsmaschine gemäß Fig. 2 in einer Ansicht von oben;
- Fig. 3: eine Bearbeitungsmaschine in einer zweiten Position in einer Ansicht von vorne;
- Fig. 3a: eine Bearbeitungsmaschine gemäß Fig. 3 in einer Ansicht von oben;
- Fig. 4: eine Bearbeitungsmaschine in einer dritten Position in einer seitlichen Ansicht;
- Fig. 4a: eine Bearbeitungsmaschine gemäß Fig. 4 in einer Ansicht von oben;
- Fig. 5: eine nicht erfindungsgemäß Bearbeitungsmaschine mit einem drehbar aufgenommenen Wasserstrahlschneidkopf ohne weitere Bearbeitungseinrichtung.

Folgende Bezugszeichen werden in den Abbildungen verwendet:
- A: radialer Abstand zwischen den Drehachsen 3 und 4
- 1: (weitere) Bearbeitungseinrichtung
- 2: Wasserstrahlschneidkopf
- 3: Bearbeitungsmaschinendrehachse, insbesondere Drehachse der Bearbeitungsmaschine, sowie insbesondere Drehachse der weiteren Bearbeitungseinrichtung
- 4: Achse, insbesondere Drehachse des Wasserstrahlschneidkopfes
- 11: Antrieb
- 12: Kreissägeblatt
- 13: Verkleidung
- 14: Drehachse
- 21: Drehlagereinrichtung, insbesondere bestehend aus Lager (25) und Lageraunahme (26)
- 22: Zuleitung
- 23: Anschlusspunkt bzw. Anschlusskupplung
- 24: Anschluss für das zum Schneiden benötigte Fluid
- 25: Lager
- 26: Lageraufnahme

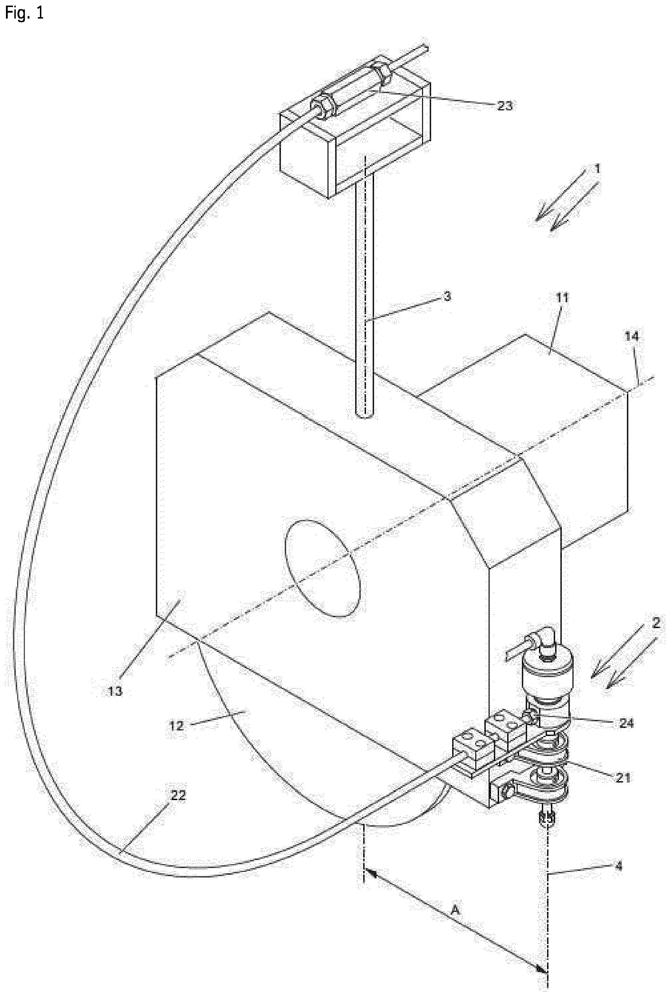

Zunächst wird auf Fig. 1 Bezug genommen.

Eine erfindungsgemäße Bearbeitungsmaschine umfasst im Wesentlichen einen Wasserstrahlschneidkopf 2 und insbesondere eine weitere Bearbeitungseinrichtung 1.

Die gesamte Bearbeitungsmaschine kann um mindestens eine Achse 3 gedreht werden, die nachfolgend als Bearbeitungsmaschinendrehachse bezeichnet werden soll. Der Wasserstrahlschneidkopf 2 ist in einem radialen Abstand A zu dieser Achse 3 angeordnet. Es fallen die Drehachse 3 der Bearbeitungsmaschine und die Drehachse der weiteren Bearbeitungseinrichtung 1 zusammen. Die weitere Bearbeitungseinrichtung 1 ist vorzugsweise als Kreissäge, umfassend einen Antrieb 11, ein Kreissägeblatt 12 und eine Verkleidung 13 für das Kreissägeblatt 12 ausgestaltet. Auch andere Arten von geeigneten Bearbeitungseinrichtungen sind denkbar. Die Drehachse 14 des Kreissägeblattes 13 ist vorzugsweise orthogonal zur Drehachse 3 der Bearbeitungsmaschine bzw. der weiteren Bearbeitungseinrichtung 1 ausgerichtet.

Erfindungsgemäß ist vorgesehen, dass der Wasserstrahlschneidkopf 2 um eine Achse 4 drehbar aufgenommen ist. Hierzu kann der Wasserstrahlschneidkopf 2 beispielsweise in einer geeigneten Drehlagereinrichtung 21 aufgenommen sein. Die Drehlagereinrichtung 21 kann beispielweise zwei Wälzlager umfassen, die in Achsrichtung senkrecht übereinander in geeigneten Lageraufnahmen aufgenommen sind. Bei einer Ausgestaltung der weiteren Bearbeitungseinrichtung 1 als Kreissäge mit einer entsprechenden Einhausung bzw. Verkleidung 13 des Sägeblattes 12, kann die Drehlagereinrichtung 21 beispielsweise an der Einhausung 13 angebracht sein.

Die Drehachse 4 des Wasserstrahlschneidkopfes ist parallel zu der Drehachse 3 der Bearbeitungsmaschine ausgerichtet.

Der Wasserstrahlschneidkopf 2 ist mit einem Anschluss 24 für das zum Schneiden benötigte Fluid ausgestattet. Der Wasserstrahlschneidkopf 2 ist vorzugsweise zusammen mit dem Anschluss 24 drehbar aufgenommen. Der Wasserstrahlschneidkopf 2 ist mit einer Zuleitung 22 für das zum Schneiden benötigte Fluid, insbesondere Wasser, ausgestattet. Es handelt sich dabei um eine Rohrleitung, die zur Zuführung des Fluids unter hohem Druck geeignet ist. Die Zuleitung 22 ist entsprechend an dem Anschluss 24 angeschlossen.

Es ist vorgesehen, dass sich die Zuleitung 22 von einer Anschlusskupplung 23 von der Achse 3 der Bearbeitungsmaschine zu dem Anschluss 24 des Wasserstrahlschneidkopfs 2 erstreckt. Vorzugsweise ist die Anschlusskupplung 23 in axialer Richtung oberhalb der weiteren Bearbeitungseinrichtung 1 angeordnet. Die Zuleitung 22 ist ausladend, insbesondere bogenförmig, zwischen der Anschlusskupplung 23 und dem Wasserstrahlschneidkopf 2, insbesondere dem Anschluss 24, angeordnet. Der sich ergebende Radius kann vorteilhaft großzügig ausgelegt werden, beispielsweise um zu enge Bögen oder Knicke zu vermeiden.

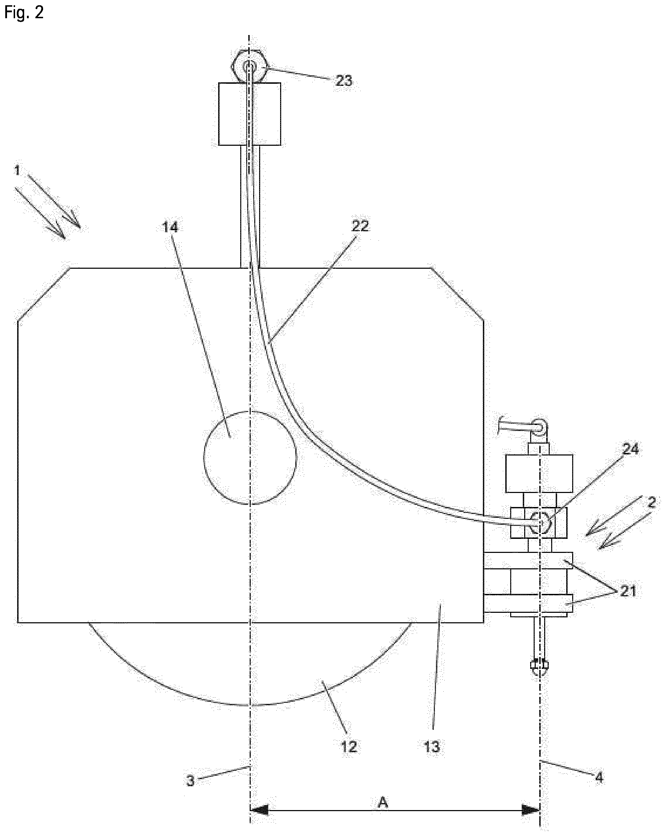

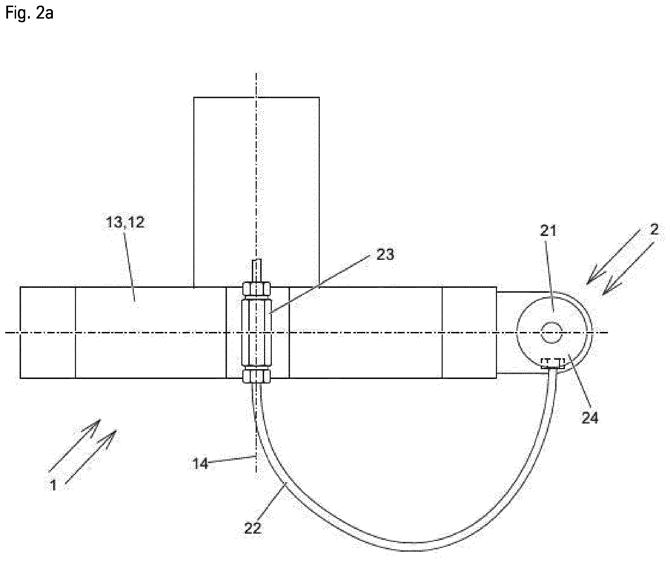

Eine Betätigung, insbesondere Drehen, der Bearbeitungsmaschine um die Achse 3, soll nachfolgend anhand der Fig. 2 bis 4 näher erläutert werden. Es versteht sich, dass hier nur einige ausgewählte Verfahrensschritte dargestellt sind, wie sie für das Verständnis der erfindungsgemäßen Vorrichtung hilfreich sind. Die Betätigung kann weitere, dem Fachmann bekannte, Schritte bzw. Zwischenschritte umfassen.

In der Fig. 2 ist die Bearbeitungsmaschine in einer ersten Position, die auch als Ausgangsposition angesprochen werden kann, dargestellt. In dieser ersten Position ist die weitere Bearbeitungseinrichtung 1 in einer ersten Drehstellung und der Wasserstrahlschneidkopf 2 in einer ersten Drehstellung. Um eine geeignete Referenz festzulegen, wird davon ausgegangen, dass diese erste Drehstellung in beiden Fällen 0° betragen soll.

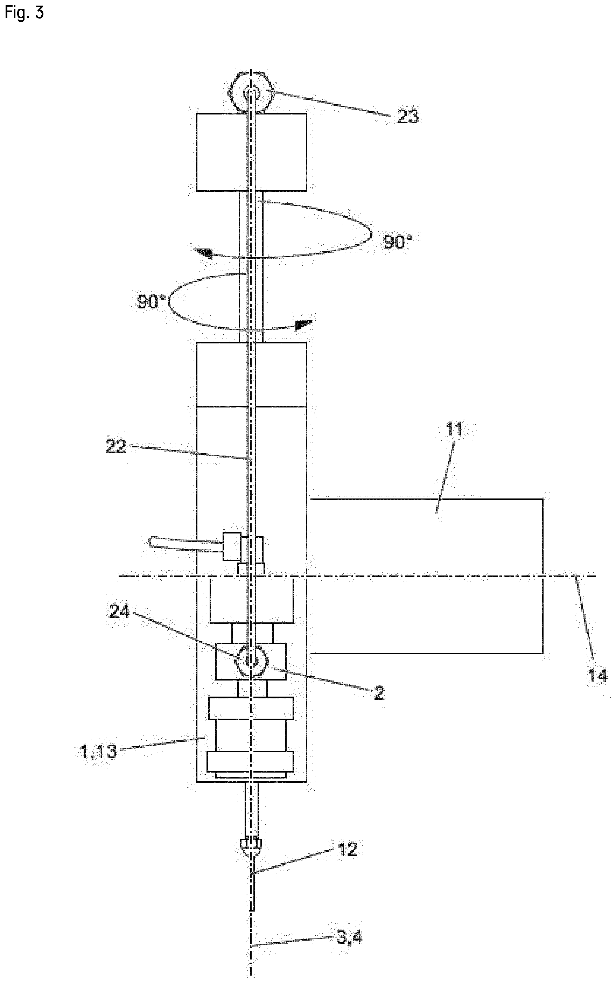

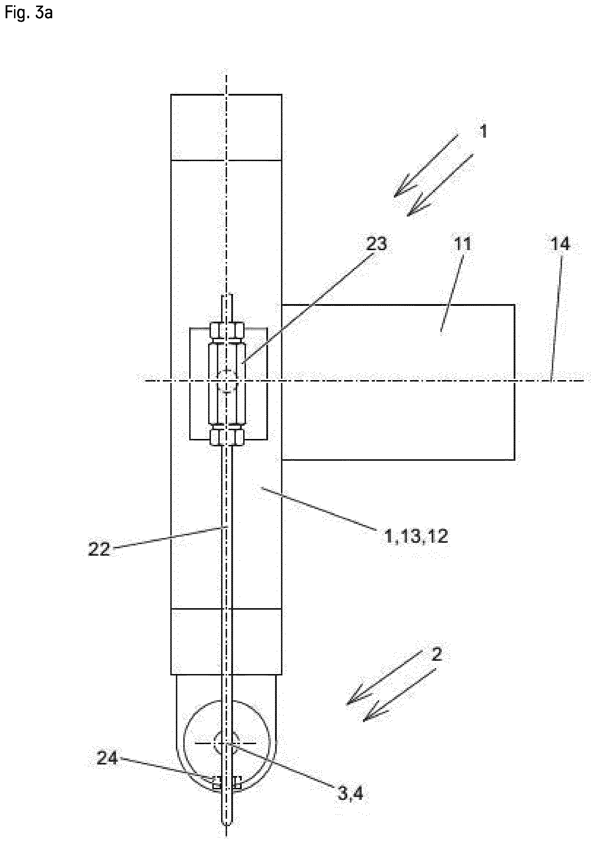

In der Fig. 3 ist die Bearbeitungsmaschine in einer zweiten Position, die auch als Zwischenposition angesprochen werden kann, dargestellt. Es ist erkennbar, dass sich die weitere Bearbeitungseinrichtung 1 in einer zweiten Drehstellung und der Wasserstrahlschneidkopf 2 sich in einer zweiten Drehstellung befindet. Im Hinblick auf die Ausgangsposition beträgt die zweite Drehstellung der weiteren Bearbeitungseinrichtung 90° und die zweite Drehstellung des Wasserstrahlschneidkopfes -90°. Mit anderen Worten, die weitere Bearbeitungseinrichtung 1, also z. B. die Kreissäge, wurde um 90° in die eine und der Wasserstrahlschneidkopf 2 um 90° in die andere Richtung gedreht.

Es sei angemerkt, dass es sich bei den Drehstellungen um relative Drehstellungen zwischen Bearbeitungseinrichtung 1 und Wasserstrahlschneidkopf 2 handelt. Hierdurch soll insbesondere die Verdrehbarkeit des Wasserstrahlschneidkopfes 2 und die sich hieraus ergebenden positiven Effekte auf die Zuleitung 22 erläutert werden. Zudem dienen die hier ausgeführten Winkelstellungen lediglich als Beispiel. Weiterhin sollte bei der Stellung des Wasserstrahlschneidkopfes immer von näherungsweisen Werten gesprochen werden, denn kleine Winkelabweichungen können zu einer besseren Entlastung der Rohrleitung führen.

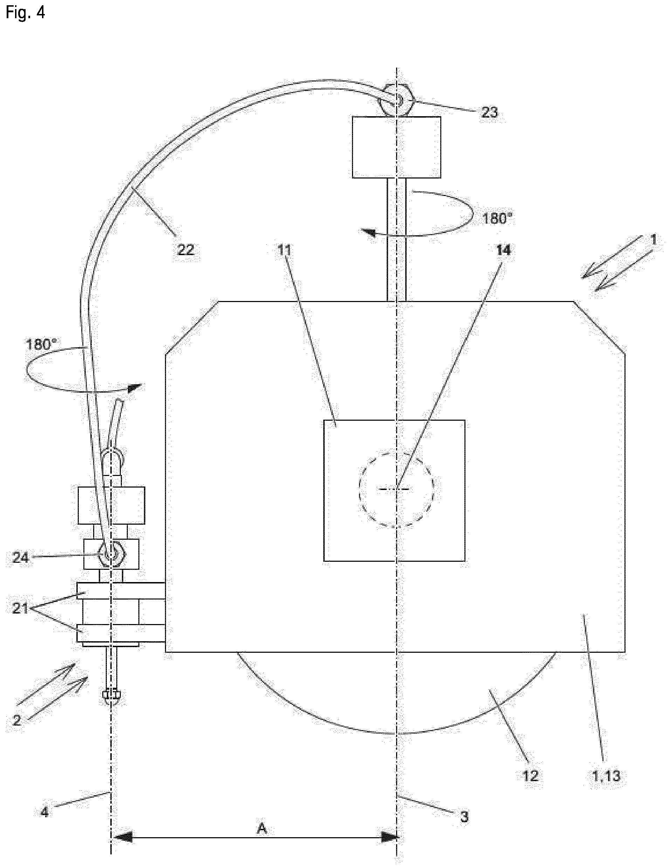

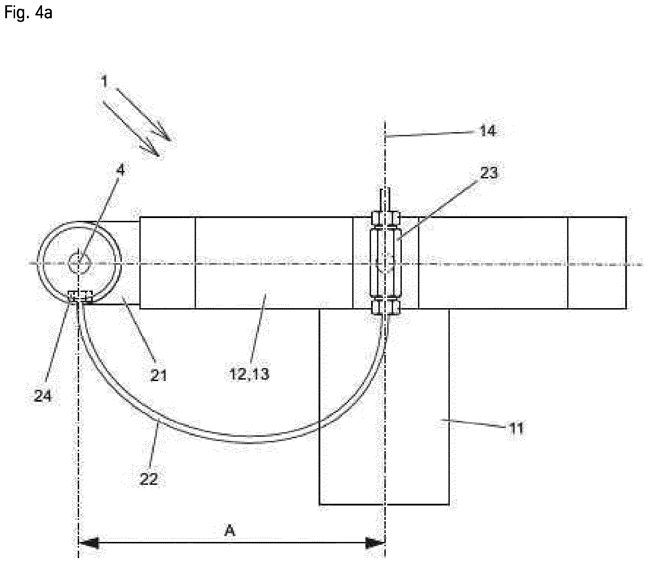

In der Fig. 4 ist die Bearbeitungsmaschine in einer dritten Position dargestellt. Es ist erkennbar, dass sich die weitere Bearbeitungseinrichtung 1 in einer dritten Drehstellung und der Wasserstrahlschneidkopf 2 sich in einer dritten Drehstellung befindet. Im Hinblick auf die Ausgangsposition beträgt die dritte Drehstellung der weiteren Bearbeitungseinrichtung 180° und die dritte Drehstellung des Wasserstrahlschneidkopfes -180°. Mit anderen Worten, die weitere Bearbeitungseinrichtung 1, also z. B. die Kreissäge, wurde um 180° in die eine und der Wasserstrahlschneidkopf 2 um 180° in die andere Richtung gedreht.

Grundsätzlich kann also vorgesehen sein, dass bei Drehung der Bearbeitungsmaschine um die Achse 3 der Wasserstrahlschneidkopf 2 gegenläufig zu der weiteren Bearbeitungseinrichtung 1 gedreht wird.

Wenn also davon ausgegangen wird, dass die Bearbeitungsmaschine zunächst einen Schnitt in die eine Richtung vollzogen hat, dann ist die Bearbeitungsmaschine nunmehr um 180° gedreht und kann entsprechend einen Schnitt in die andere Richtung vollziehen. Das Werkstück (nicht dargestellt) kann gewissermaßen mäanderförmig bearbeitet werden.

Ein sich aus der Erfindung ergebender Vorteil wird ersichtlich. Durch die drehbare Aufnahme des der Wasserstrahlschneidkopfes 2, radial von der Drehachse 3 der Bearbeitungsmaschine entfernt, kann eine grundsätzlich starre oder zumindest schwach elastische Zuleitung 22 verwendet werden. Gleichermaßen ist die Versorgung des Wasserstrahlschneidkopfes 2 in jeder Drehposition gewährleistet. Es kann beispielsweise auf anfällige und teure drehbare Kupplungen im Zuleitungsstrang verzichtet werden. Dies macht die gesamte Bearbeitungsmaschine wartungsarm, wenig störanfällig und entsprechend kostengünstiger. Es wird zudem ersichtlich, dass die Drehung des der Wasserstrahlschneidkopfes durch den Widerstand der Zuleitung, insbesondere eine HD-Leitung (Metallrohr) mit der das Hochdruckwasser zum Schneiden zuführt wird, bewerkstelligt werden kann.

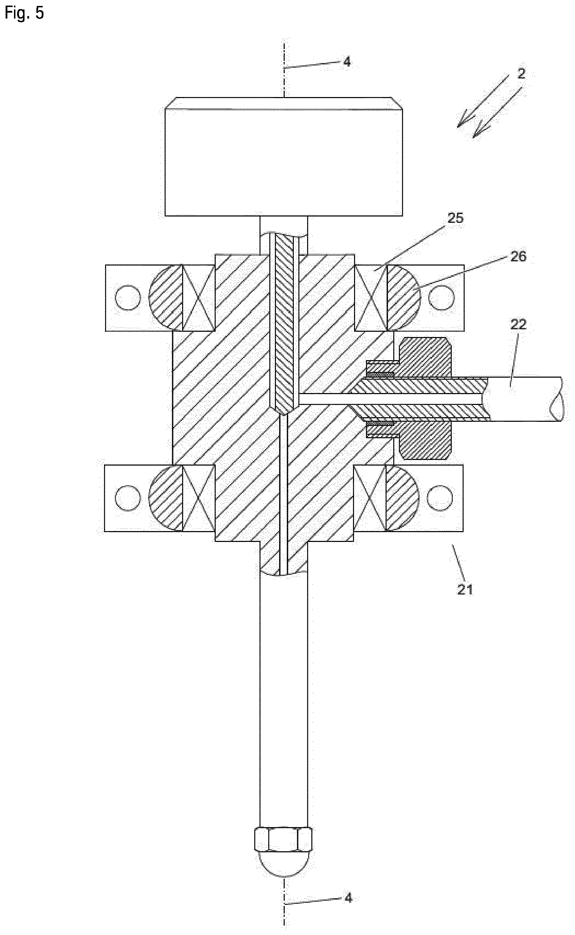

In der Fig. 5 ist eine Bearbeitungsmaschine mit einem drehbar aufgenommenen Wasserstrahlschneidkopf dargestellt. Die Fig. 5 dient im Wesentlichen der Darstellung einer nicht zur Erfindung gehörigen Bearbeitungsmaschine, umfassend einen Wasserstrahlschneidkopf 2.

## Patentansprüche

1. Bearbeitungsmaschine, umfassend
- einen Wasserstrahlschneidkopf (2) mit einem Anschluss (24) für das zum Schneiden benötigte Fluid, wobei
- die Bearbeitungsmaschine eine weitere Bearbeitungseinrichtung (1) umfasst, wobei
- die Bearbeitungsmaschine zusammen mit der weiteren Bearbeitungseinrichtung (1) um mindestens eine Achse (3) gedreht werden kann,
- der Wasserstrahlschneidkopf (2) in einem radialen Abstand (A) zu der Drehachse (3) der Bearbeitungsmaschine angeordnet ist, wobei
- das
- der Wasserstrahlschneidkopf (2) um eine Achse (4) drehbar aufgenommen ist, und
- die Drehachse (3) der weiteren Bearbeitungseinrichtung (1) und die Drehachse (4) des Wasserstrahlschneidkopfes (2) parallel zueinander angeordnet sind, wobei
- der Wasserstrahlschneidkopf (2) mit einer Zuleitung (22) für das zum Schneiden benötigte Fluid, insbesondere Wasser, ausgestattet ist, wobei sich die Zuleitung (22) von einem Anschlusspunkt (23) von der Achse (3) der Bearbeitungsmaschine zu dem Anschluss (24) des Wasserstrahlschneidkopfs (2) erstreckt, wobei
- die Zuleitung (22) ausladend, insbesondere bogenförmig, zwischen dem Anschlusspunkt (23) und dem Anschluss (24) des Wasserstrahlschneidkopfes (2) angeordnet ist.

2. Bearbeitungsmaschine nach Anspruch 1, **dadurch gekennzeichnet, dass** der Wasserstrahlschneidkopf (2) zusammen mit dem Anschluss (24) drehbar aufgenommen ist.

3. Bearbeitungsmaschine nach mindestens einem der vorhergehenden Ansprüche, **dadurch gekennzeichnet, dass** die weitere Bearbeitungseinrichtung (1) als Kreissäge ausgestaltet ist, umfassend ein Kreissägeblatt (12) mit einer Drehachse (14), welches von einer Verkleidung (13) teilweise umgeben ist.

4. Bearbeitungsmaschine nach mindestens einem der vorhergehenden Ansprüche, **dadurch gekennzeichnet, dass** der Wasserstrahlschneidkopf (2) in einer Drehlagereinrichtung (21) aufgenommen ist.

5. Bearbeitungsmaschine nach Anspruch 4, **dadurch gekennzeichnet, dass** die Drehlagereinrichtung (21) mindestens eine Lageraufnahme mit einem Wälzlager oder Gleitlager umfasst.

6. Bearbeitungsmaschine nach mindestens einem der vorhergehenden Ansprüche 3 bis 5, **dadurch gekennzeichnet, dass** die Drehachse (14) des Kreissägeblattes (12) orthogonal zu der Drehachse (3) der weiteren Bearbeitungseinrichtung (1) und/oder der Drehachse (4) des Wasserstrahlschneidkopfes (2) ausgerichtet ist.

7. Bearbeitungsmaschine nach Anspruch 1, **dadurch gekennzeichnet, dass** der Anschlusspunkt (23) in axialer Richtung oberhalb der weiteren Bearbeitungseinrichtung (1) angeordnet ist.

8. Verfahren zur Betätigung einer Bearbeitungsmaschine gemäß mindestens einem der vorhergehenden Ansprüche, **dadurch gekennzeichnet, dass** der Wasserstrahlschneidkopf (2) gedreht wird.

9. Verfahren nach Anspruch 8, **dadurch gekennzeichnet, dass** bei Drehung der Bearbeitungsmaschine um die Achse (3) der Wasserstrahlschneidkopf (2) gegenläufig zu der weiteren Bearbeitungseinrichtung (1) gedreht wird.

10. Verfahren gemäß einem der Ansprüche 8 und 9, **gekennzeichnet durch** folgende Verfahrensschritte:
- die Bearbeitungsmaschine befindet sich in einer ersten Position, die sich insbesondere dadurch auszeichnet, dass sich die weitere Bearbeitungseinrichtung (1) in einer ersten Drehstellung und der Wasserstrahlschneidkopf (2) in einer ersten Drehstellung befindet;
- Schwenken der Bearbeitungsmaschine in eine zweite Position, die sich **dadurch** auszeichnet, dass sich die weitere Bearbeitungseinrichtung (1) in einer zweiten Drehstellung und der Wasserstrahlschneidkopf (2) sich in einer zweiten Drehstellung befindet, wobei sich die zweite Position im Hinblick auf die erste Position **dadurch** auszeichnet, dass die zweite Drehstellung der weiteren Bearbeitungseinrichtung 90° und die zweite Drehstellung des Wasserstrahlschneidkopfes -90° beträgt;
- Schwenken der Bearbeitungsmaschine in eine dritte Position, die sich **dadurch** auszeichnet, dass sich die weitere Bearbeitungseinrichtung (1) in einer dritten Drehstellung und der Wasserstrahlschneidkopf (2) sich in einer dritten Drehstellung befindet, wobei sich die dritte Position im Hinblick auf die erste Position **dadurch** auszeichnet, dass die dritte Drehstellung der weiteren Bearbeitungseinrichtung 180° und die dritte Drehstellung des Wasserstrahlschneidkopfes -180° beträgt.

## Claims

1. Processing machine, comprising
- a water jet cutting head (2) with a connection (24) for the fluid required for cutting, wherein
- the processing machine comprises a further processing device (1), wherein
- the processing machine together with the further processing device (1) can be rotated about at least one axis (3),
- the water jet cutting head (2) is arranged at a radial distance (A) from the axis of rotation (3) of the processing machine, wherein
- the water jet cutting head (2) is mounted rotatably about an axis (4), and
- the axis of rotation (3) of the further processing device (1) and the axis of rotation (4) of the water jet cutting head (2) are arranged parallel to one another, wherein
- the water jet cutting head (2) is equipped with a supply line (22) for the fluid required for cutting, in particular water, wherein the supply line (22) extends from a connection point (23) of the axis (3) of the processing machine to the connection (24) of the water jet cutting head (2), wherein
- the supply line (22) is arranged in a projecting, in particular curved, manner between the connection point (23) and the connection (24) of the water jet cutting head (2).

2. Processing machine according to claim 1, **characterised in that** the water jet cutting head (2) is rotatably mounted together with the connection (24).

3. Processing machine according to at least one of the preceding claims, **characterised in that** the further processing device (1) is designed as a circular saw, comprising a circular saw blade (12) with an axis of rotation (14), which is partially surrounded by a casing (13).

4. Processing machine according to at least one of the preceding claims, **characterised in that** the water jet cutting head (2) is accommodated in a rotary bearing device (21).

5. Processing machine according to claim 4, **characterised in that** the rotary bearing device (21) comprises at least one bearing holder with a roller bearing or plain bearing.

6. Processing machine according to at least one of the preceding claims 3 to 5, **characterised in that** the axis of rotation (14) of the circular saw blade (12) is aligned orthogonally to the axis of rotation (3) of the further processing device (1) and/or the axis of rotation (4) of the water jet cutting head (2).

7. Processing machine according to claim 1, **characterised in that** the connection point (23) is arranged in the axial direction above the further processing device (1).

8. Method for operating a processing machine according to at least one of the preceding claims, **characterised in that** the water jet cutting head (2) is rotated.

9. Method according to claim 8, **characterised in that** when the processing machine is rotated about the axis (3), the water jet cutting head (2) is rotated in the opposite direction to the further processing device (1).

10. Method according to one of claims 8 and 9, **characterised by** the following method steps:
- the processing machine is in a first position, which is **characterised in** particular by the fact that the further processing device (1) is in a first rotational position and the waterjet cutting head (2) is in a first rotational position;
- Pivoting the processing machine into a second position, which is **characterised in that** the further processing device (1) is in a second rotational position and the water jet cutting head (2) is in a second rotational position, wherein the second position is characterised with respect to the first position **in that** the second rotational position of the further processing device is 90° and the second rotational position of the water jet cutting head is -90°;
- Pivoting the processing machine into a third position, which is **characterised in that** the further processing device (1) is in a third rotational position and the water jet cutting head (2) is in a third rotational position, the third position being characterised with respect to the first position **in that** the third rotational position of the further processing device is 180° and the third rotational position of the water jet cutting head is -180°.

## Revendications

1. Machine de traitement, comprenant
- une tête de découpe au jet d'eau (2) avec un raccord (24) pour le fluide nécessaire à la découpe, où
- la machine d'usinage comprend un autre dispositif d'usinage (1), dans lequel
- la machine d'usinage peut être tournée autour d'au moins un axe (3) conjointement avec l'autre dispositif d'usinage (1),
- la tête de coupe au jet d'eau (2) est disposée à une distance radiale (A) de l'axe de rotation (3) de la machine d'usinage, où
- la tête de découpe au jet d'eau (2) est logée de manière à pouvoir tourner autour d'un axe (4), et
- l'axe de rotation (3) de l'autre dispositif d'usinage (1) et l'axe de rotation (4) de la tête de découpe au jet d'eau (2) sont disposés parallèlement l'un à l'autre, où
- la tête de découpe au jet d'eau (2) est équipée d'une conduite d'alimentation (22) pour le fluide nécessaire à la découpe, en particulier de l'eau, la conduite d'alimentation (22) s'étendant depuis un point de raccordement (23) de l'axe (3) de la machine d'usinage jusqu'au raccordement (24) de la tête de découpe au jet d'eau (2), où
- la conduite d'alimentation (22) est disposée en porte-à-faux, en particulier en forme d'arc, entre le point de raccordement (23) et le raccordement (24) de la tête de découpe au jet d'eau (2).

2. Machine d'usinage selon la revendication 1, **caractérisée en ce que** la tête de coupe au jet d'eau (2) est logée de manière à pouvoir tourner conjointement avec le raccord (24).

3. Machine d'usinage selon au moins l'une des revendications précédentes, **caractérisée en ce que** l'autre dispositif d'usinage (1) est conçu comme une scie circulaire, comprenant une lame de scie circulaire (12) avec un axe de rotation (14), qui est partiellement entourée par un habillage (13).

4. Machine d'usinage selon au moins l'une des revendications précédentes, **caractérisée en ce que** la tête de découpe au jet d'eau (2) est logée dans un dispositif de palier rotatif (21).

5. Machine d'usinage selon la revendication 4, **caractérisée en ce que** le dispositif de palier rotatif (21) comprend au moins un logement de palier avec un palier à roulement ou un palier lisse.

6. Machine d'usinage selon au moins l'une des revendications précédentes 3 à 5, **caractérisée en ce que** l'axe de rotation (14) de la lame de scie circulaire (12) est orienté orthogonalement à l'axe de rotation (3) de l'autre dispositif d'usinage (1) et/ou à l'axe de rotation (4) de la tête de découpe au jet d'eau (2).

7. Machine d'usinage selon la revendication 1, **caractérisée en ce que** le point de raccordement (23) est disposé dans la direction axiale au-dessus de l'autre dispositif d'usinage (1).

8. Procédé d'actionnement d'une machine d'usinage selon au moins l'une des revendications précédentes, **caractérisé en ce que** l'on fait tourner la tête de découpe au jet d'eau (2).

9. Procédé selon la revendication 8, **caractérisé en ce que**, lors de la rotation de la machine d'usinage autour de l'axe (3), la tête de coupe au jet d'eau (2) est tournée en sens inverse de l'autre dispositif d'usinage (1).

10. Procédé selon l'une des revendications 8 et 9, **caractérisé par** les étapes de procédé suivantes :
- la machine d'usinage se trouve dans une première position, qui se caractérise notamment par le fait que l'autre dispositif d'usinage (1) se trouve dans une première position de rotation et la tête de découpe au jet d'eau (2) dans une première position de rotation ;
- pivotement de la machine d'usinage dans une deuxième position, qui se **caractérise par le fait que** l'autre dispositif d'usinage (1) se trouve dans une deuxième position de rotation et la tête de découpe au jet d'eau (2) se trouve dans une deuxième position de rotation, la deuxième position **se caractérisant, par** rapport à la première position, par le fait que la deuxième position de rotation de l'autre dispositif d'usinage est de 90° et la deuxième position de rotation de la tête de découpe au jet d'eau est de -90° ;
- pivotement de la machine d'usinage dans une troisième position, qui se **caractérise par le fait que** l'autre dispositif d'usinage (1) se trouve dans une troisième position de rotation et la tête de découpe au jet d'eau (2) se trouve dans une troisième position de rotation, la troisième position **se caractérisant, par** rapport à la première position, par le fait que la troisième position de rotation de l'autre dispositif d'usinage est de 180° et la troisième position de rotation de la tête de découpe au jet d'eau est de -180°.
